# EUROPEAN PATENT APPLICATION

(11) **EP 0 926 578 A1**
(43) Date of publication of application: **30.06.1999**
(21) Application number: 97650059.5
(22) Date of filing: 23.12.1997
(51) Int. Cl.: G05B 19/418, G06F 17/60

(54) **A process controller**

(71) Applicant: Dawnlawn Limited, Dublin 2 (IE)
(72) Inventor: O'Sullivan, Fionan, Blessington, County Wicklow (IE)
(74) Representative: O'Connor, Donal Henry

(57) **Abstract**

A process controller for ensuring secure operations of the controlled process having an access regulator for validating the contents of and controlling access between a user interface and a number of files. The access regulator has a control generator and an associated timer device for analysing a data access request from the user interface and generating a temporary two part authority register appropriate to the data access request for comparison with a validation word to permit or deny access.

## Description

The invention relates to a process controller and more particularly to a process controller of the type having:-
a plant device interface;
a user interface; and
a processor unit comprising:-
   an initialisation controller incorporating means for dynamically maintaining a control file having values for parameters associated with a manufacturing and distribution location;
   means for dynamically storing a table of geographical district codes, each associated with a range of distances between said location and the district;
   means for directing storage of a set of truck type codes, each associated with truck data;
   means for storing a list of material end use codes and means for automatically generating a job file for a building site to which material is supplied from said location, said job file including automatically retrieved pre-set codes;
an operations controller having
   means for retrieving a job file on receipt of an instruction at the user interface;
   means for automatically generating plant device instructions to control a plant device according to data in the relevant job file and the instruction received from the user interface, means for transmitting the command file to the machine interface for subsequent transmission to the plant device; and
a communications processor comprising means for generating a transmission file which having control data and means for automatically transmitting the transmission file to the host processor for consolidation.

British Patent Application No. GB-9418999 (A Manufacturing Process Controller) relates to a process controller of this type constructed for controlling manufacturing of concrete. The process controller overcomes many of the limitations of previously known controllers of this type by providing the functions of:-
interfacing with plant devices for the timely and efficient delivery of products such as concrete;
ensuring that data which is generated by the process controller be consolidated together in an efficient manner with data integrity in a host computer system; and
minimising waste both of time and materials at a manufacturing location.

While the controller described addresses these industry requirements it does not provide the security which is necessary in such systems.

One of the features of modern industry is the number of independent contractors, operators and people generally working on independent contracts. The number of direct employees in many an industry and in many a company has fallen dramatically in the eighties and nineties. For example, where heretofore a company would manufacture, deliver and sell its own products, in many instances, not alone are the sales people working on commission, but indeed the actual delivery may be carried out by independent contractors. This is particularly a feature of the building industry where the delivery of stone and sand is usually carried out by independent contractors. Very often this wouldn't be one contractor, but a number of independent contractors and indeed they could simply be owner/drivers of trucks who would deliver stone, gravel and other building materials on a per load/mile basis or per tonne/mile basis. Indeed many payments are by way of a per tonne/mile payment. Substantially the same applies for example with ready-mixed concrete and indeed with all other forms of materials.

It is a truism to state that the control and information provided by most computerised systems is only as good as the inputted information. There are essentially two ways in which the inputted information can be incorrectly provided. The more obvious one that can be dealt with by way of training, checks, etc. is simple operator error, however, the more important one and the one much more difficult to eradicate is simply fraud. Everybody knows that so-called white collar fraud is on the increase. It is vitally important to detect such fraud and indeed in many instances such fraud is only detected when serious discrepancies in some other factor arise that alerts the operators to fraud, such as greatly reduced margins, the wrong cash, balances and so on. Indeed one could say with a certain degree of certainty that "non-greedy" fraud is almost impossible to detect where the person carrying out the fraud in effect simply skims or takes a small percentage of the profits, materials, or what have you. Such frauds are almost impossible to detect. For example, in quarrying, whether it be of crushed stone or in sand pits, it is virtually impossible to give accurate estimates of usage.

There is therefore a need for an improved process controller which will overcome these problems.

The invention is characterised in that the process controller comprises an access regulator for validating the contents of and controlling access between the user interface and the control file, the table of geographical district codes, the stored set of truck type codes, the material end use codes, the job file the command file and the transmission file. In this way access to the data which would allow incorrect use of the system is overcome.

Preferably the access regulator incorporates a control generator and an associated timer device for receiving a data access request from the user interface and generating a temporary two part authority register appropriate to the data access request.

In a preferred embodiment the access regulator incorporates:-
means for retrieving and processing time and date information from the timer device in response to an updateable access function stored in the regulator to generate a sixteen bit validation word;
a comparator communicating with the user interface for comparing the validation word and a preset portion of the data access request;
a generator for appending bytes to the two part authority register in response to a matched output from the comparator to identify a read only authority byte and an update authority byte; and
means for updating an access log with the validation word.

Preferably the access regulator incorporates a bit encoder for selectively encrypting and storing selected files using the validation word.

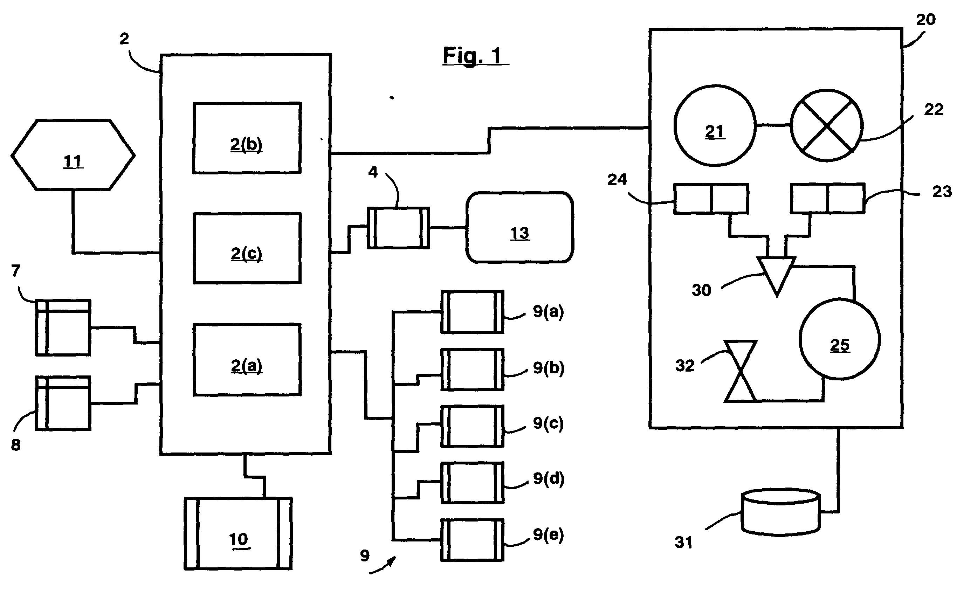

The invention will be more clearly understood from the following description of an embodiment thereof, given by way of example only with reference to the accompanying drawing in which :-
Fig. 1 is a block diagram showing construction of a process controller of the invention.

Referring to the drawing there is shown a process controller of the invention indicated generally by the reference numeral 1.

The process controller 1 has a command signal processor 2 which is connected indirectly to a plant device 3. The device 3 may be any one of a number of pieces of plant equipment to be controlled. The process controller 1 is constructed for interfacing with the device 3 and also for interfacing with users and with other devices. The controller 1 is also constructed for communication with a host data processor for process monitoring, central data processing and data validation.

The processor 2 comprises an operations controller 2(a), an initialisation controller 2(b), and a communications processor 2(c). The processor 2 is connected to the plant device 3 via a machine interface 4 which connects with the machine 3 by an RS232 interface. The processor 2 communicates with users through a user interface 11 and with the remote host processor with a modem 13. Random Access Memory (RAM) and Read Only Memory (ROM) circuits 7 and 8 are connected to the processor 2. Further, there is a control file 9 and a set of job files 10 connected to the processor 2.

The process controller 1 further comprises an access regulator 20 for validating the contents of and controlling access between the user interface 11 and the control file 9. The control file 9 having a table of geographical district codes 9(a) and a stored set of truck type codes 9(b). The access regulator 20 also validates the contents of and controls access between the user interface 11 a set of material end use codes 9(c), the job files 10, a command file 9(d) and a transmission file 9(e).

The access regulator 20 also incorporates a control generator 21 and an associated timer device 22 for receiving a data access request from the user interface 11 and generating a temporary two part authority register 23 appropriate to the data access request. The access regulator 20 incorporates means for retrieving and processing time and date information from the timer device 22 using an internal processor (not shown). This internal processor and an internal updateable access function of the regulator 20 are used to generate a sixteen bit validation word 24.

The regulator 20 has a comparator 30 communicating with the user interface 11 for comparing the validation word 24 and a preset portion of the data access request from the user interface 11. The regulator 20 also has a generator 25 for appending bytes to the two part authority register 23 in response to a matched output from the comparator 30 to identify, a read only authority byte and an update authority byte, and means for updating an access log 31 with the validation word 24. The access regulator 20 further incorporates a bit encoder 32 for selectively encrypting and storing selected files using the validation word 24.

In order not to unnecessarily obscure the present invention specific applications and details relating to the production and storage of files within the controller 1 have been omitted.

The manner of operation of the controller 2(b) is similar to that of know controllers in that it is constructed to initially generate and to automatically maintain the control file 9 which contains a set of parameter values to control the manner in which production and output is controlled. As indicated above the reasons for limiting access to the control file 9 and monitoring any changes made are many. It is an important aspect of operation of the process controller 1 that it impossible for unauthorised personnel to make erroneous or fraudulent changes to the given parameters and this will be described below with reference to the access regulator 20.

The initialisation controller 2(b) also directs storage and automatic maintenance of the table of geographical district codes 9(a) in which there are building sites and ranges for distances between the location of the controller 1 and each district. It also directs storage of codes for a pre-set group of truck types codes 9(b). Another important aspect of the invention is the manner in which the access regulator 20, described below prevents changes such as the distance from the location of the controller 1 to a given site being made to favour certain hauliers.

The initialisation controller 2(b) monitors the user interface 11 for reception of data relating to a new job which is defined by the controller 2(b) as a new building site which will be supplied from the location. On detection of this data it is passed to the access regulator 20 which issues an asynchronous activate signal to the control generator 21. When the control generator 21 receives this activate signal it immediately polls the timer device 22. The timer device 22 returns a chronometric value for current time and date and passes the values to the internal processor. The internal processor in turn uses the updateable access function of the regulator 20 to generate the sixteen bit validation word 24. It will be appreciated that the access function may manipulate the returned value prior to the generation of the validation word 24 in any of a number of ways whether based on a mathematical or logical algorithm. This ensures that even in the event of an unauthorised user noting acceptance details of an access request by an authorised user the useful the period during which the details will operate is extremely limited. Similarly as the access function of the regulator 20 is updateable periodically it prevents the unauthorised users from interpolating the operation of the function using a number of noted acceptances.

The access regulator 20 then generates the temporary two part authority register 23 by reading and storing two selected eight bit words of the data access request. This authority register 23 is passed with the validation word 24 to the comparator 30 before initialising two eight bit comparisons of the contents. When a matched output of either of the word comparisons is received the regulator 20 passes the matched portion to the generator 25 to appended the matched bytes to the two part authority register 23. When a first byte is appended to the register 23 coupled with a second null byte this identifies a read only authorisation however when two non-null bytes are appended an update authority is indicated. The access log 31 is then updated with the with the validation word 24 to log all data requests received from the user interface. In this way it will be immediately apparent on review of the log 31 if a number of authorisation failures indicating tampering with the system have occurred.

The controller 2(b) automatically retrieves relevant district, truck and end use codes according to the received data upon receipt of the validation word 24 and creates a job file to which these codes are written. Other data received from the user interface 11 is written to the job file and data is subject to automatic verification operations. Such operations include verification of the distance between the site and the location by automatic reference to the ranges associated with the district code. Another operation is verification of the ability of the truck associated with the truck code to carry the load which is requested initially. Obviously the validation word will prevent unauthorised personnel from amending the values in an attempt to pervert the correct operation of the controller.

When data relating to a particular delivery order is inputted at the interface 11, the operations controller 2(a) automatically detects this activates the access resource controller 20 as described above and if appropriate retrieves the relevant job file. Data from the particular order and data retrieved from the job file is used in generating a command sequence for the plant device 3 comprising machine control instructions which are communicated in a conventional manner however it is an important feature of the invention that the instructions are also noted in the access log 31 by interleaving stored access bits with command sequences and an index of command sequences. This has the benefit of making the log 31 impossible to decipher and ensures that all deliveries are accounted for and subsequently billed.

An important aspect of operation of the operations controller 2(a) is that it writes a record for each delivery material to disk and sets a flag in the record to indicate whether or not it has been transmitted to the host computer via the modem 13. For various reasons, a delivery record may remain on the process controller 1 without being transmitted for a period of days, depending on the nature of the deliveries involved. However, the control file 9 sets a maximum number of days for holding the data without transmission to the host computer. The access regulator 20 ensures as with all access requests that the maximum number of days that may elapse is not altered and thus that certain transactions are not reported further enhancing the security of the controller 1. Upon expiry of this period, the communications processor 2(c) automatically transmits the record unless previously transmitted in an end-of-day process carried out by the communications processor 2(c). The communications processor 2(c) filters the delivery records according to their flags and generates a transmission file storing the records. Various other transaction data such as purchasing data is automatically written to the transmission file. The communications processor 2(c) activates the bit encoder 32 as each record is stored for selectively encrypting and storing the record using the validation word 24 in a control file. This control file is processed on receipt by the host to ensure the accuracy and completeness of the transaction data and in the event of a comparison fail will cause the communication processor to automatically retransmit the files. In the unlikely event of a second failure to validate the data a copy of the transmission file secretly stored on the controller 1 is requested by the host which is transmitted by the communications processor 2(c). A bit comparison of the two files is conducted by the host to identify anomalies. in this way a secure process controller is guaranteed which overcomes the problems associated with fraudulent interference by users.

The invention is not limited to the embodiments hereinbefore described, but may be varied in both construction and detail within the scope of the appended claims.

## Claims

1. A process controller of the type having :
a plant device interface;
a user interface; and
a processor unit comprising:-
an initialisation controller incorporating means for dynamically maintaining a control file having values for parameters associated with a manufacturing and distribution location;
means for dynamically storing a table of geographical district codes, each associated with a range of distances between said location and the district;
means for directing storage of a set of truck type codes, each associated with truck data;
means for storing a list of material end use codes and means for automatically generating a job file for a building site to which material is supplied from said location, said job file including automatically retrieved pre-set codes;
an operations controller having
means for retrieving a job file on receipt of an instruction at the user interface;
means for automatically generating plant device instructions to control a plant device according to data in the relevant job file and the instruction received from the user interface, means for transmitting the command file to the machine interface for subsequent transmission to the plant device; and
a communications processor comprising means for generating a transmission file which having control data and means for automatically transmitting the transmission file to the host processor for consolidation;
characterised in that the process controller further comprises an access regulator for validating the contents of and controlling access between the user interface and the control file, the table of geographical district codes, the stored set of truck type codes, the material end use codes, the job file the command file and the transmission file.

2. A process controller as claimed in claim 1, wherein the access regulator incorporates a control generator and an associated timer device for receiving a data access request from the user interface and generating a temporary two part authority register appropriate to the data access request.

3. A process controller as claimed in claim 2 wherein the access regulator incorporates:-
means for retrieving and processing time and date information from the timer device in response to an updateable access function stored in the regulator to generate a sixteen bit validation word;
a comparator communicating with the user interface for comparing the validation word and a preset portion of the data access request;
a generator for appending bytes to the two part authority register in response to a matched output from the comparator to identify a read only authority byte and an update authority byte; and
means for updating an access log with the validation word.

4. A process controller as claimed in claim 3 wherein the access regulator incorporates a bit encoder for selectively encrypting and storing selected files using the validation word.

5. A process controller substantially as hereinbefore described, with reference to and as illustrated in the accompanying drawings.
